Europäisches Patentamt

European Patent Office

Office européen des brevets

(11) Veröffentlichungsnummer: **0 216 167**
**A2**

# (12) EUROPÄISCHE PATENTANMELDUNG

(21) Anmeldenummer: 86111734.9

(22) Anmeldetag: 25.08.86

(51) Int. Cl.⁴: **H04B 9/00** , G06F 13/40 ,
H04L 11/16

(30) Priorität: 25.09.85 DE 3534180

(43) Veröffentlichungstag der Anmeldung:
01.04.87 Patentblatt 87/14

(84) Benannte Vertragsstaaten:
AT BE CH DE FR GB IT LI LU NL SE

(71) Anmelder: **Siemens Aktiengesellschaft Berlin
und München**
**Wittelsbacherplatz 2**
**D-8000 München 2(DE)**

(72) Erfinder: **Thinschmidt, Hans, Dipl.-Ing. (FH)**
**Kreuzlingerstrasse 52c**
**D-8034 Germering(DE)**
Erfinder: **Mittelmann, Rudolf, Dipl.-Ing.**
**Dornacherstrasse 10/21**
**A-4040 Linz/Donau(AT)**

(54) **Erweiterungsnetzwerk zur Erhöhung der Anzahl von Teilnehmeranschlüssen an ein passives optisches Bussystem mit optischen Mischern.**

(57) Ein Erweiterungsnetzwerk zur Erhöhung der Anzahl von Teilnehmeranschlüssen an ein passives optisches Bussystem mit optischen Mischern - $(M_1....M_m)$. Die Mischer $(M_1....M_m)$ sind in m Gruppen - $(G_1....G_m)$ angeordnet, und die je Teilnehmer (Tln) individuell vorgesehenen Lichtsender $(S_1....S_n)$ sind mit den ebenfalls individuell je Teilnehmer (Tln) vorgesehenen Lichtempfängern $(E_1....E_n)$ über jeweils nur einen der Mischer $(M_1....M_m)$ nach Art eines vermaschten Netzes miteinander verbunden, so daß in dem optischen Pfad die Dämpfung nur eines Mischers eingefügt ist.

EP 0 216 167 A2

## Erweiterungsnetzwerk zur Erhöhung der Anzahl von Teilnehmeranschlüssen an ein passives optisches Bussystem mit optischen Mischern

Die vorliegende Erfindung betrifft ein Erweiterungsnetzwerk zur Erhöhung der Anzahl von Teilnehmeranschlüssen an ein passives optisches Bussystem mit optischen Mischern, beispielsweise sog. Sternkopplern.

Passive optische Mischer, nämlich sog. Sternkoppler, die zur Bildung eines optischen Bussystem verwendbar sind, haben eine begrenzte Anzahl von Ein-und Ausgängen. Will man mehr Teilnehmer, beispielsweise Teilaufgabenrechner in einem Mehrrechnersystem, an das Bussystem anschliessen, so müssen mehrere Sternkoppler zu einem System auf geeignete Weise zusammengeschaltet werden.

Eine Möglichkeit zur Erweiterung derartig zu bildender Kopplernetze ist aus der DOS 31 23 455 bekannt. Diese bekannte Erweiterungsmöglichkeit hat den Vorteil, daß in die betreffenden erforderlichen Lichtleiter zwischen den Sternkopplern mit geringem Aufwand opto-elektrische Verstärker eingefügt werden können, die die Lichtsignale regenerieren und die Dämpfung in dem Kopplernetzwerk verringern. Die vermaschten Sternkoppler verhalten sich bezüglich Laufzeiten und Teilnehmeranschaltung im wesentlichen, wie sich ein entsprechend großer Koppler verhalten würde, wenn sie räumlich dicht zusammengebaut sind. Die Durchgangsdämpfung ist für ideale optische Bauteile ebenfalls dieselbe wie bei einem einzigen Koppler, jedoch kommen in der Praxis einige Dezibel zusätzliche Verluste durch Verluste im Mischer und ggf. in den erforderlichen optischen Steckern hinzu. Die sich ergebenden Signallaufzeiten und -dämpfungen können jedoch insbesondere in Mehrrechnersystemen nachteilig sein.

Der vorliegenden Erfindung liegt die Aufgabe zugrunde, ein Erweiterungsnetzwerk zu schaffen, das ebenfalls die Möglichkeit des Anschlusses großer Teilnehmerzahlen gestattet, jedoch hinsichtlich der Signallaufzeiten und -dämpfungen günstiger als die bekannte Erweiterungslösung ist.

Diese der vorliegenden Erfindung zugrundeliegende Aufgabe wird durch ein Erweiterungsnetzwerk der eingangs genannten Art und gemäß dem Oberbegriff des Patentanspruchs 1 gelöst, das durch die in dem kennzeichnenden Teil des Patentanspruchs 1 angegebenen Merkmal charakterisiert ist.

Vorteilhafte Weiterbildungen der Erfindung sind durch die in den Unteransprüchen angegebenen Merkmale gekennzeichnet.

Im folgenden wird die Erfindung anhand einer Figur, die ein bevorzugtes Ausführungsbeispiel für die Erfindung betrifft, im einzelnen erläutert.

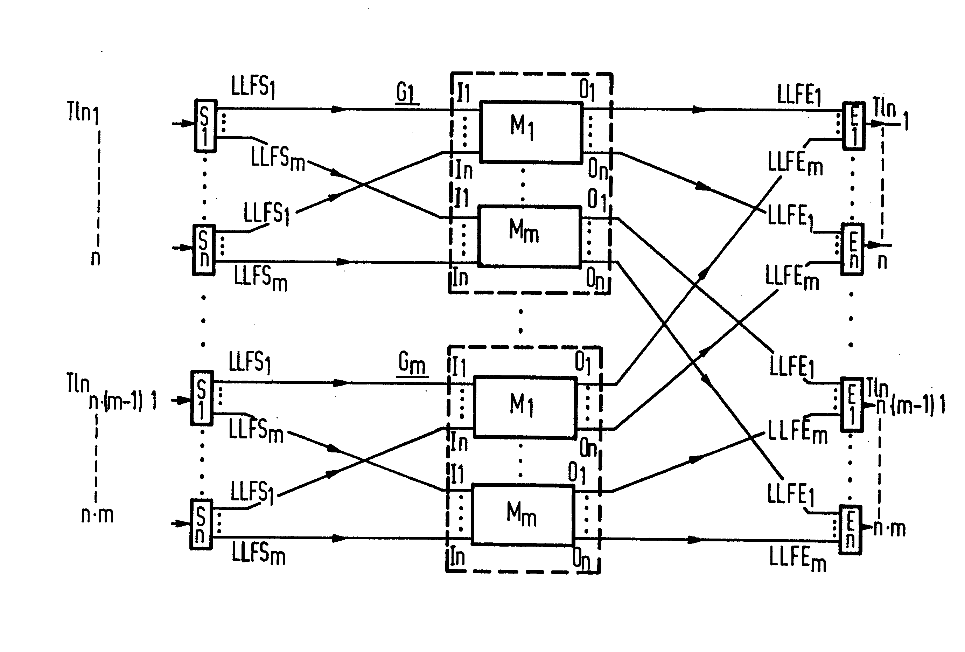

Die einzige Figur zeigt schematisch eine Anordnung von teilnehmerindividuellen Lichtsendern S für Teilnehmer $Tln_1,...,_n$ $Tln_n$ $(m-1)1...n.m)$ teilnehmerindividuellen Lichtempfängern E für diese Teilnehmer Tln, optischen Mischern $M_1...M_m$ sowie senderseitigen Lichtleiterfasern LLFS und empfängerseitigen Lichtleiterfasern LLFE.

Zum Anschluß von n.m Teilnehmern Tln, beispielsweise Teilaufgabenrechnern in einem Mehrrechnersystem, die in m Gruppen $G_1...G_m$ zu je n Teilnehmern Tln zusammengefaßt sind, an das optische Bussystem sind m.m Mischer in den m Gruppen $G_1...G_m$ zu je m Mischern $M_1...M_m$ vorgesehen. Von dem jeweils individuell je Teilnehmer Tln angeordneten Lichtsender $S_1...S_n$, $S_1...S_n$, ... gehen m optisch parallelbetriebene senderseitige Lichtleiterfasern $LLFS_1...LLFS_m$, $LLFS_1...LLFS_m$,... aus, wobei jeweils in jeder der m Gruppen $G_1...G_m$ die erste Lichtleiterfaser $LLFS_1$ dieser m senderseitigen Lichtleiterfasern $LLFS_1...LLFS_m$, die von dem ersten Lichtsender $S_1$ der betreffenden Gruppe, z. B. $G_1$, ausgeht, mit einem ersten optischen Eingang $I_1$ des ersten Mischers $M_1$ dieser Gruppe $G_1$, die zweite Lichtleiterfaser dieser m senderseitigen Lichtleiterfasern mit einem ersten optischen Eingang des zweiten Mischers der Gruppe, ... und die m-te senderseitige Lichtleiterfaser $LLFS_m$ dieser m senderseitigen Lichtleiterfasern mit dem ersten optischen Eingang $I_1$ des m-ten Mischers $M_m$ dieser Gruppe $G_1$ verbunden ist.

Zu dem jeweils individuell je Teilnehmer Tln angeordneten Lichtempfänger $E_1...E_n$, $E_1...E_n$, ... führen m empfängerseitige Lichtleiterfasern $LLFE_1...LLFE_m$, $LLFE_1.... LLFE_m$, ... , wobei abhängig von der betreffenden Gruppe $G_1...G_m$, z. B. der ersten Gruppe $G_1$, die erste empfängerseitige Lichtleiterfaser $LLFE_1$ dieser m Lichtleiterfasern $LLFE_1...LLFE_m$, die zu dem ersten Lichtempfänger $E_1$ der betreffenden Gruppe, z. B. $G_1$, führen, von einem ersten optischen Ausgang $O_1$ des ersten Mischers $M_1$ dieser Gruppe $G_1$, die zweite empfängerseitige Lichtleiterfaser dieser m Lichtleiterfasern von einem ersten optischen Ausgang des ersten Mischers $M_1$ der zweiten Gruppe, ... und die m-te empfängerseitige Lichtleiterfaser $LLFE_m$ dieser m Lichtleiterfasern von dem ersten optischen Ausgang $O_1$ des ersten Mischers $M_1$ der m-ten Gruppe ausgeht.

Zum optischen Parallelbetreiben der m senderseitigen Lichtleiterfasern LLFS sind beispielsweise gemäß einer Weiterbildung der Erfindung in jedem der n.m Lichtsender S jeweils m elektrisch parallelgeschaltete lichtemittierende Dioden LED angeordnet.

Es kann erfindungsgemäß auch vorgesehen sein, daß zum optischen Parallelbetreiben der m senderseitigen Lichtleiterfasern LLFS in jedem der n.m Lichtsender S jeweils m elektrisch in Reihe geschaltete lichtemittierende Dioden LED angeordnet sind.

Eine andere Weiterbildung sieht vor, daß zum optischen Parallelbetreiben der m senderseitigen Lichtleiterfasern LLFS in jedem der n.m Lichtsender S jeweils m lichtemittierende Dioden LED angeordnet sind, die in eine Anzahl von Gruppen unterteilt sind, wobei die lichtemittierenden Dioden LED jeweils jeder Gruppe einander elektrisch parallelgeschaltet sind und die derart gebildeten Gruppenanordnungen elektrisch in Reihe geschaltet sind.

Eine technisch einfachere, jedoch kostenmäßig und platzmäßig aufwendigere Lösung sieht vor, daß zum optischen Prallelbetreiben der senderseitigen Lichtleiterfasern LLFS in jedem der n.m Lichtsender S jeweils eine m-fache Anordnung vollständiger elektrooptischer Sendewandler gegeben ist.

Erfindungsgemäß kann auch vorgesehen sein, daß zum optischen Parallelbetreiben der senderseitigen Lichtleiterfasern LLFS in jedem der n.m Lichtsender S die m Lichtleiterfasern $LLFS_1,...LLFS_m$ in an sich bekannter Weise an eine gemeinsame lichtemittierende Diode LED durch sog. Tapern optisch angekoppelt sind, vergl. beispielsweise Johnson et al, Appl. Phys. Lett. 35 (7), 1, 1979, S. 479.

Schließlich ist eine andere Weiterbildung der Erfindung dadurch charakterisiert, daß zum optischen Parallelbetreiben der senderseitigen Lichtleiterfasern LLFS jeweils ein optischer Mischer je Teilnehmer TIn vorgesehen ist, dem aus einem gemeinsamen, teilnehmerindividuellen elektro-optischen Sendewandler Lichtsignale zugeführt werden, die durch den optischen Mischer zu den m senderseitigen Lichtleiterfasern $LLFS_1,...LLFS_m$ übertragen werden.

Zum Empfangen von Lichtsignalen über eine oder mehrere der m empfängerseitigen Lichtleiterfasern $LLFE_1,...LLFE_m$ je Teilnehmer TIn mittels des betreffenden Lichtempfängers E können erfindungsgemäß in jedem der n.m Lichtempfänger jeweils m elektrisch parallelgeschaltete Phototransistoren angeordnet sein.

Zum Empfangen von Lichtsignalen über eine oder mehrere der m empfängerseitigen Lichtleiterfasern LLFE in jedem der n.m Lichtempfänger E kann gemäß einer anderen Weiterbildung für die vorliegende Erfindung jeweils ein mfache Anordnung vollständiger opto-elektrischer Empfangswandler vorgesehen sein.

Alternativ dazu kann auch vorgesehen sein, daß zum Empfangen von Lichtsignalen über eine oder mehrere der m empfängerseitigen Lichtleiterfasern LLFE in jedem der n.m Lichtempfänger E die m Lichtleiterfasern $LLFE_1,...LLFE_m$ in an sich bekannter Weise an einen gemeinsamen Phototransistor durch sog. Tapern optisch angekoppelt sind.

Schließlich kann erfindungsgemäß vorgesehen sein, daß zum Empfangen von Lichtsignalen über eine oder mehrere der m empfängerseitigen Lichtleiterfasern $LLFE_1,...LLFE_m$ jeweils ein optischer Mischer je Teilnehmer TIn vorgesehen ist, dem über eine oder mehrere der m empfängerseitigen Lichtleiterfasern LLFE Lichtsignale zugeführt werden, die durch den optischen Mischer zu einem gemeinsamen, teilnehmerindividuellen opto-elektrischen Empfangswandler übertragen werden.

Bei der Anordnung gemäß der Figur sind alle Sternkoppler parallelgeschaltet, d. h. jeder Lichtimpuls durchläuft nur einen Mischer, wenn von ggf. vorgesehenen teilnehmerindividuellen Mischern für Lichtsender bzw. Lichtempfänger abgesehen wird.

Die Dämpfung zwischen Lichtsender und Lichtempfänger ist deshalb nur durch den Teilungsfaktor und Verluste eines einzigen Sternkopplers - (zuzüglich Leitungsdämpfung, Steckerdämpfung etc. wie üblich) gegeben. Dieser Vorteil der Anordnung kommt vor allem für rein passive Netze mit großen Teilnehmerzahlen und relativ kurzen Entfernungen der Teilnehmer zu den Kopplern zum Tragen. Die Anzahl der Anschlüsse an den Lichtsendern und Lichtempfängern ist von der Ausbaustufe des Netzwerks abhängig.

## Zahlenbeispiel 1:

Es sollen 64 Teilnehmer an das optische Bussystem angeschlossen werden. Dazu werden benötigt: 16 Sternkoppler und 8 × 64 = 512 Lichtleiterfasern. Jeder Sendemodul muß vier Ausgänge, jeder Empfangsmodul muß vier Eingänge haben.

Die Durchgangsdämpfung des Koppelnetzwerkes (ohne Lichtleiterkabel) setzt sich zusammen aus 12 dB für Lichtaufteilung (1:16) zuzüglich der einfachen Mischer-Verluste (1...4 dB).

## Zahlenbeispiel 2:

Es sollen 1024 Teilnehmer an das optische Bussystem angeschlossen werden. Dazu sind vorzusehen:

16 Teilnehmergruppen mit 64 Teilnehmern je Teilnehmergruppe.

Es werden benötigt: 256 Sternkoppler und 2 ˣ 16 ˣ 1024 = 2 ˣ 16384 Lichtleiterfasern.

Die Durchgangsdämpfung des Koppelnetzwerkes ist bestimmt durch den Aufteilungsfaktor 1:64 - (18,1 db) zuzüglich der einfachen Verlustdämpfung der Koppler (etwa 1...4 dB).

Die vorliegende Erfindung ist nicht auf die zuvor angegebenen Ausführungsbeispiele beschränkt.

Bezugszeichenliste

$S_1...S_n$ Lichtsender

$LLFS_1...LLFS_m$ senderseitige Lichtleiterfaser

$G_1...G_m$ Gruppe

$M_1...M_m$ Mischer

$I_1...I_n$ optischer Eingang

$O_1...O_n$ optischer Ausgang

$LLFE_1...LLFE_m$ empfängerseitige Lichtleiterfaser

$E_1...E_n$ Lichtempfänger

$Tln_1...Tln_n$ Teilnehmer

**Ansprüche**

1. Erweiterungsnetzwerk zur Erhöhung der Anzahl von Teilnehmeranschlüssen an ein passives optisches Bussystem mit optischen Mischern, dadurch **gekennzeichnet,**

- daß zum Anschluß von n.m Teilnehmern (Tln), beispielsweise auf Teilaufgabenrechnern in einem Mehrrechnersystem, die in m Gruppen ($G_1... G_m$) zu je n Teilnehmern (Tln) zusammengefaßt sind, an das optische Bussystem m.m Mischer in den m Gruppen ($G_1..G_m$) zu je m Mischern ($M_1...M_m$) vorgesehen sind,

-daß von einem jeweils individuell je Teilnehmer - (Tln) angeordneten Lichtsender ($S_1...S_n$, $S_1...S_n$,...) m optisch parallelbetriebene senderseitige Lichtleiterfasern ($LLFS_1...LLFS_m$ , $LLFS_1...LLFS_m$,...) ausgehen, wobei jeweils in jeder der m Gruppen - ($G_1...G_m$) die erste Lichtleiterfaser ($LLFS_1$) dieser m senderseitigen Lichtleiterfasern $LLFS_1... LLFS_m$), die von dem ersten Lichtsender ($S_1$) der betreffenden Gruppe (z. B. $G_1$) ausgeht, mit einem ersten optischen Eingang ($I_1$) des ersten Mischers ($M_1$) dieser Gruppe ($G_1$), die zweite Lichtleiterfaser dieser m senderseitigen Lichtleiterfasern mit einem ersten optischen Eingang des zweiten Mischers der Gruppe, ... und die m-te senderseitige Lichtleiterfaser - ($LLFS_m$) dieser m senderseitigen Lichtleiterfasern mit dem ersten optischen Eingang ($I_1$) des m-ten Mischers ($M_m$) dieser Gruppe ($G_1$) verbunden ist, und

-daß zu einem jeweils individuell je Teilnehmer - (Tln) angeordneten Lichtempfänger ($E_1...E_n$, $E_1...E_n$, ...) m empfängerseitige Lichtleiterfasern ($LLFE_1...LLFE_m$, $LLFE_1...LLFE_m$,...) führen, wobei abhängig von der betreffenden Gruppe ($G_1...G_m$), z. B. der ersten Gruppe $G_1$, die erste empfängerseitige Licht leiterfaser ($LLFE_1$) dieser m Lichtleiterfasern ($LLFE_1...LLFE_m$ ), die zu dem ersten Lichtempfänger ($E_1$) der betreffenden Gruppe (z. B. $G_1$) führen, von einem ersten optischen Ausgang ($O_1$) des ersten Mischers ($M_1$) dieser Gruppe - ($G_1$), die zweite empfängerseitige Lichtleiterfaser dieser m Lichtleiterfasern von einem ersten optischen Ausgang des ersten Mischers ($M_1$) der zweiten Gruppe, ... und die m-te empfängerseitige Lichtleiterfaser ($LLFE_m$) dieser m Lichtleiterfasern von dem ersten optischen Ausgang ($O_1$) des ersten Mischers ($M_1$) der m-ten Gruppe ausgeht.

2. Erweiterungsnetzwerk nach Anspruch 1, dadurch **gekennzeichnet,** daß zum optischen Parallelbetreiben der m senderseitigen Lichtleiterfasern (LLFS) in jedem der n.m Lichtsender (S) jeweils m elektrisch parallelgeschaltete lichtemittierende Dioden LED angeordnet sind.

3. Erweiterungsnetzwerk nach Anspruch 1, dadurch **gekennzeichnet,** daß zum optischen Parallelbetreiben der m senderseitigen Lichtleiterfasern (LLFS) in jedem der n.m Lichtsender (S) jeweils m elektrisch in Reihe geschaltete lichtemittierende Dioden LED angeordnet sind.

4. Erweiterungsnetzwerk nach Anspruch 1, dadurch **gekennzeichnet,** daß zum optischen Parallelbetreiben der m senderseitigen Lichtleiterfasern (LLFS) in jedem der n.m Lichtsender (S) jeweils m lichtemittierende Dioden LED angeordnet sind, die in eine Anzahl von Gruppen unterteilt sind, wobei die lichtemittierenden Dioden LED jeweils jeder Gruppe einander elektrisch parallelgeschaltet sind und die derart gebildeten Gruppenanordnungen miteinander elektrisch in Reihe geschaltet sind.

5. Erweiterungsnetzwerk nach Anspruch 1, dadurch **gekennzeichnet,** daß zum optischen Parallelbetreiben der senderseitigen Lichtleiterfasern (LLFS) in jedem der n.m Lichtsender (S) jeweils eine m-fache Anordnung vollständiger elektro-optischer Sendewandler vorgesehen ist.

6. Erweiterungsnetzwerk nach Anspruch 1, dadurch **gekennzeichnet** , daß zum optischen Parallelbetreiben der senderseitigen Lichtleiterfasern (LLFS) in jedem der n.m Lichtsender (S) die m Lichtleiterfasern (LLFS$_1$...LLFS$_m$) in an sich bekannter Weise an eine gemeinsame lichtemittierende Diode LED durch sog. Tapern optisch angekoppelt sind.

7. Erweiterungsnetzwerk nach Anspruch 1, dadurch **gekennzeichnet**, daß zum optischen Parallelbetreiben der senderseitigen Lichtleiterfasern (LLFS) jeweils ein optischer Mischer je Teilnehmer (Tln) vogesehen ist, dem aus einem gemeinsamen, teilnehmerindividuellen elektro-optischen Sendewandler Lichtsignale zugeführt werden, die durch den optischen Mischer zu den m senderseitigen Lichtleiterfasern (LLFS$_1$...LLFS$_m$) übertragen werden.

8. Erweiterungsnetzwerk nach Anspruch 1, dadurch **gekennzeichnet** , daß zum Empfangen von Lichtsignalen über eine oder mehrere der m empfängerseitigen Lichtleiterfasern - (LLFE$_1$...LLFE$_m$) je Teilnehmer (Tln) mittels des betreffenden Lichtempfängers (E) in jedem der n.m Lichtempfänger jeweils m elektrisch parallelgeschaltete Phototransistoren angeordnet sind.

9. Erweiterungsnetzwerk nach Anspruch 1, dadurch **gekennzeichnet**, daß zum Empfangen von Lichtsignalen über eine oder mehrere der m empfängerseitigen Lichtleiterfasern (LLFE) in jedem der n.m Lichtempfänger (E) jeweils ein m-fache Anordnung vollständiger opto-elektrischer Empfangswandler vorgesehen ist.

10. Erweiterungsnetzwerk nach Anspruch 1, dadurch **gekennzeichnet**, daß zum Empfangen von Lichtsignalen über eine oder mehrere der m empfängerseitigen Lichtleiterfasern ((LLFE) in jedem der n.m Lichtempfänger (E) die m Lichtleiterfasern (LLFE$_1$... LLFE$_m$) in an sich bekannter Weise an einen gemeinsamen Phototransistoren durch sog. Tapern optisch angekoppelt sind.

11. Erweiterungsnetzwerk nach Anspruch 1, dadurch **gekennzeichnet**, daß zum Empfangen von Lichtsignalen über eine oder mehrere der m empfängerseitigen Lichtleiterfasern (LLFE$_1$...LLFE$_m$) jeweils ein optischer Mischer je Teilnehmer (Tln) vorgesehen ist, dem über eine oder mehrere der m empfängerseitigen Lichtleiterfasern (LLFE) Lichtsignale zugeführt werden, die durch den optischen Mischer zu einem gemeinsamen, teilnehmerindividuellen opto-elektrischen Empfangswandler übertragen werden.

0 216 167